# EUROPEAN PATENT SPECIFICATION

(11) **EP 3 958 009 B1**
(45) Date of publication and mention of the grant of the patent: **28.08.2024**
(21) Application number: 20191744.0
(22) Date of filing: 19.08.2020
(51) Int. Cl.: G01S 5/02, G01S 5/14

(54) **MOVEABLE MACHINE**
BEWEGLICHE MASCHINE
MACHINE MOBILE

(43) Date of publication of application: 23.02.2022
(73) Proprietor: Danfoss Power Solutions ApS, 6430 Nordborg (DK)
(72) Inventor: Vidaurreta, Luis, 6430 Nordborg (DK); Botanz Holke, Luis Alberto, 6430 Nordborg (DK); Lorenzo, Monica, 6430 Nordborg (DK); Perez, Borja, 6430 Nordborg (DK)
(74) Representative: Keil & Schaafhausen Patentanwälte PartGmbB

(56) References cited:
- US-A1- 2004 117 081
- US-A1- 2017 176 571
- US-A1- 2019 155 278

## Description

The present invention relates to a moveable machine, which comprises an antenna arrangement, a control unit which controls the machine, a distance determining unit determining a distance between the antenna arrangement and a remote control means, wherein the distance determining unit is connected to the control unit. The invention also relates to a method for operating the same.

US 2019 / 0 155 278 A1 describes a safety system, method, and computer program for remotely controlled work vehicles. The system comprises the work vehicle having multiple antennas while it is controlled via a wireless remote control unit. Based on the spatial relationship between the vehicle and the wireless remote control unit it is determined whether the spatial relationship meets the determined criterion.

US 2017 / 0 176 571 A1 describes a method of determining the position of an RFID transponder.

Further, the invention relates to a method to determine a remote control means' position in relation to a moveable machine, which is controlled by a control unit, wherein a distance determining unit determines the distance between the remote control means and an antenna arrangement located on the remote control unit.

A machine, which is used in different areas like agricultural, forestry, or construction industry etc. is mostly controlled by an operator. The operator can control the machine either by controlling it from a control stand or by controlling it via a remote control means. In cases when the operator controls the machine by the remote control means the operator needs to control the machine from a certain distance in order to fulfill safety requirements. If the operator is located within a certain distance from the machine, which is closer than a required safety distance, the machine is required to stop. Stopping the machine results in the loss in operator comfort, since the operator needs to move to get out of the safety distance before the machine is allowed to move.

The problem underlying this invention is to increase the operator's comfort.

A problem solved by the invention in view of US 2019/155278 A1 is to improve the communication resources.

This problem is solved with a machine as described in the outset and having the features of claim 6.

The antenna arrangement comprises a plurality of antennas, at least a first antenna and a second antenna, wherein the first antenna and the second antenna are arranged distanced to each other, and wherein the distance determining unit is configured to determine a first distance between the first antenna and the remote control means and a second distance between the second antenna and the remote control means.

This allows that a position of the remote control means can be determined. Since an operator holds the remote control means, operator's position can be determined as well. Furthermore it can be determined if the operator's position is closer to the first antenna or to the second antenna. According to the operator's position the machine's movement possibilities can be limited or released. If the operator enters a required safety distance, the machine slows or stops any of its movements or the machine's movements can be limited according to the operator's position. As soon as the operator is outside of the safety distance, the machine movements are released to normal. As a result, the operator's safety is improved, since the machine can be moved away from the operator, who might not be able to distance himself from the machine, which also improves the operator's comfort and safety.

In an embodiment, the antennas are arranged on a longitudinal axis of the machine. The longitudinal axis of the machine is arranged in the middle of the machine, running from rear to front, or the other way around. Such an arrangement allows that the safety distance on both sides of the machine can be monitored having only two antennas which keeps the arrangement simple. In general, the safety distances are same on both sides, the right and left side, of the machine. Furthermore, it can be determined using this arrangement, whether the remote control means and its operator's position is in front or in rear of the machine. Based on the position of the remote control means, the machines movements can be limited so that the machine is allowed only to not getting closer to the remote control means position, if the position is within the safety distance. The operator's comfort is increased as well as safety aspects.

In an embodiment, a third antenna is located offset to the longitudinal axis of the machine. This allows an adaptation to a complexity of perimeter. For example, the third antenna allows a precise position determination the remote control means in terms of on which side of the machine the remote control means is located.

In an embodiment the first antenna is located in the rear area and the second antenna is located in the front area of the machine. Increasing the distance between the first antenna and the second antenna improves the precision of the determination of the remote control means position. Furthermore, the machine can be stopped as soon as the operator's position is inside of the safety distance measured from either one of the antennas.

In an embodiment, the first antenna is arranged at the very rear end of the machine and the second antenna is arrange at a very front end of the machine. Such an arrangement simplifies position determining operations to determine the remote control means position in relation to the machine.

In an embodiment, the first antenna is arranged in a middle area between the front end and the rear end of the machine. Some machines do not allow a connection from the rear end to the front end due to pollution, water, mechanical stress or the like. These problems can be eliminated by arranging the first antenna in a middle area, which can be connected to either end of the machine. Therefore, it is convenient placing one antenna in the middle area of the machine.

In an embodiment, the first antenna is arranged in a middle position between the very front end and the very back end of the machine. Placing the first antenna in the middle position simplifies the remote control means position determination, since a mathematical complexity can be simplified.

In an embodiment, the machine is a self propelled machine. Most of agricultural, forestry or constructional industry machines which can be remotely controlled do are self propelled, they don't rely on an external power supply. Such machines however, require a certain safety distance in order to protect the operator. Furthermore, self propelled machines are not limited in their movements by cables or alike allowing them to move freely if their movement is not limited. Since the machine is self propelled it is flexible, which increases the operator comfort.

In an embodiment, the machine comprises an articulated steering. Machines having an articulated steering can be versatile having a tight turning radius allowing tight turns. This increases the flexibility.

Further the underlying problem is solved with a method as described at the outset with the features according to claim 1.

The antenna arrangement comprises a plurality of antennas, at least a first and a second antenna, wherein the distance determining unit determines a first distance between the first antenna and the remote control means and a second distance between the second antenna and the remote control means, wherein the distance determining unit determines the remote control mean's position based on the first and second distance.

Having the operator's position respectively the remote control means' position allows a precise monitoring of the safety distance in relation to the operator's position. This allows that safety mechanisms can work precisely, increasing the operator's comfort, since the operator can get closer to the machine without violating safety regulations.

In an embodiment, the distance determining unit relies on a time of fly method. The time of fly method describes a method to determine distances between a transmitter and a receiver. The time needed to for signals to be transferred from the transmitter to the receiver is measured. Based on the time, the actual distance can be determined. This method consumes little computing power resulting in little costs.

In an embodiment, the position of the remote control means is determined by triangulation. The triangulation allows a determination of a the remote control means position based on the distance between the two antennas and the first and second distance. The method is little computing power consuming.

In a preferred embodiment, the distance determining unit relies on data transferring signals. In order to control the machine via the remote control means, data needs to be transferred from the remote control means to the control unit, which controls the machine. These signals can be used to determine the first and second distances. As a result, the first and second distances can be determined on an already existing periphery.

In a preferred embodiment, the first distance and the second distance are determined alternating. Determining the first and second distance alternating reduces transfer operations between the antennas and the remote control means, reducing energy consumption saving costs.

In a preferred embodiment, movement possibilities of the machine are limited according to the determined position of the remote control means. By knowing the position of the remote control means and therefore the position of an operator operating the machine via the remote control means the machine can be limited in its movements or even stopped. According to the operator's position the machine's movements can be limited in order to protect the operator, allowing the machine to move away from the operator but not further towards the operator's position. This increases the operator's safety and the operator's comfort. The invention will now be described in more detail with reference to the drawings wherein:
- Fig. 1: a top view of a machine and a symmetric antenna arrangement,
- Fig. 2: a top view of a machine and an asymmetric antenna arrangement,

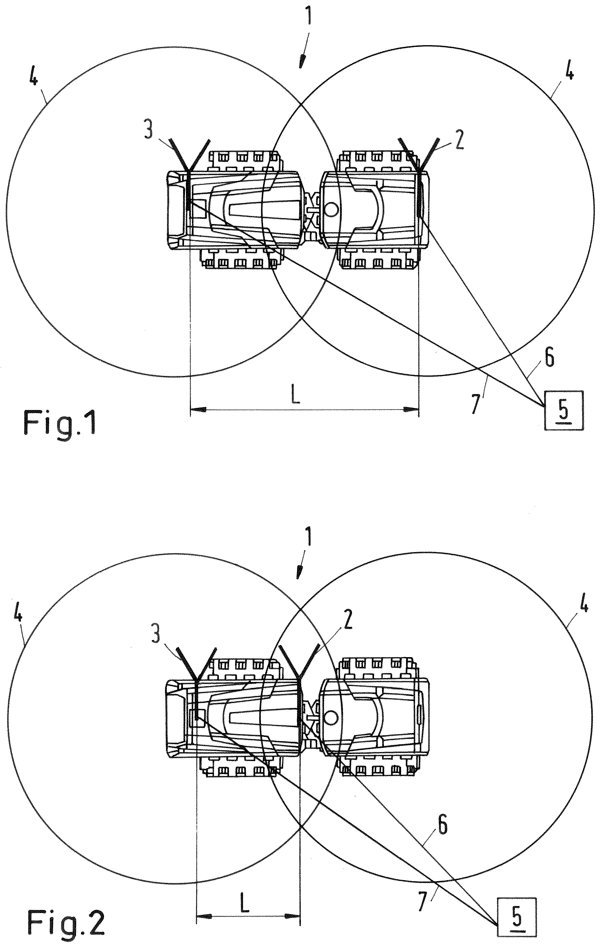

Fig. 1 depicts an embodiment in which a machine 1 is depicted having two antennas 2, 3 arranged on a longitudinal axis of the machine 1. The first antenna 2 is positioned at the rear area of the machine 1, while the second antenna 3 is located at the front area of the machine 1. Each of the antennas 2,3 is a center of a safety distance circle 4. Depending on the machine 1 the radius of the safety distance circle 4 varies, a small machine 1 requires a small safety distance 4 while a bigger machine requires a bigger safety distance 4 than a small machine 1.

The first and the second antenna 2,3 are arranged distanced to each other by a distance L. The depicted machine 1 comprises an articulated steering, but it can also comprise conventional steering, front wheel steering, rear wheel steering, all wheel steering etc.

The machine 1 is controlled by a not depicted control unit which is connected to a not depicted distance determining unit. The antennas 2,3 are also connected to the distance determining unit and to a not depicted control unit, which controls movements of the machine 1.

In order to control the machine 1 a not depicted operator controls a remote control means 5. The remote control means 5 comprise not depicted means to control the machine 1 and not depicted communication means to communicate with the machine 1. The remote control means 5 and the machine 1 can be connected via a wired connection or via a wireless connection.

The distance determining unit determines distances 6,7 between the antennas 2,3 and the remote control means 5. A first distance 6 is a distance between the first antenna 2 and the remote control means 5 while a second distance 7 is a distance between the second antenna 3 and the remote control means 5. The distances 6,7 are determine based on a time of flight method, measuring the time a signal needs to be transferred from a not depicted transmitter to a not depicted receiver.

A not depicted third antenna can be located offset of the longitudinal axis of the machine 1. The third antenna is connected to the distance determining unit and the control unit. This allows a precise determining of the position of the remote control means 5 in relation to the machine 1, for example on which side of the machine 1 the remote control means 5 is located. A respective limitation of movements of the machine 1 according to the remote control means 5 position can be implemented, increasing the operator's safety.

The antennas 2,3 depicted in Fig. 1 are located in the front respective rear area of the machine 1. Safety requirements of the machine 1 require a safety distance 4, here for example of 1,5 meters, measured from an outmost element. Since the antennas 2,3 might not be arranged on that respective outmost element, the safety distance 4 might be increased in order to fulfil safety requirements. A different approach would be an adaptation of the first and second distance 6,7, which might involve an addition or subtraction of a certain value or a multiplication of a factor. The adaptation might further depend on the actual measured distance. As a result of the adaptation the distances 6,7 might increase or decrease. Based on the first and second distance 6,7 the distance determining unit determines a position of the remote control means 5. Furthermore, the safety distance can be adapted in accordance to not depicted accessory equipment, like extension arms, excavator shovels or a like.

Fig. 2 depicts an embodiment wherein the antennas 2,3 arranged in an asymmetrical manner on the machine 1. The second antenna 3 is located as previously described at the front area of the machine 1. The first antenna 2, however, is arranged in a middle area between the front end and the rear end of the machine.

The machine 1 is operated by the operator via the remote control means 5. The remote control means 5 is connected via a data connection to the machine 1 in order to transfer control signals or other information from the remote control means 5 to the machine 1 or the other way around. In this embodiment, the connection is wireless, but it can also be a wired connection. Control signals from the remote control means 5 are transferred through the antennas 2,3 to the distance determining unit and the control unit. The control unit controls movements of the machine and the distance determining unit determines the first distance 6 and the second distance 7.

The distance determining unit determines based on the first and second distance 6,7 the position of the remote control means 5. The remote control means 5 is usually operated and held by the operator and therefore the position of the remote control means 5 and the position of the operator are the same.

The first distance 6 and the second distance 7 are determined alternating by the distance determining unit. An alternating frequency should be sufficiently high that movements of the operator can be neglected. Preferably is a frequency between 1 Hz and 100 Hz. Further the frequency can be adapted in relation to the measured distances 6,7. When the operator's position is for example within a range of 30 % of the safety distance around the safety distance the frequency can be increased. If the operator's position however is 10 times the safety distance 4 away from the machine 1 the frequency can be decreased. This can reduce energy consumption.

Furthermore, the distance determining unit determines the distances 6,7 based on data signals and/or control signals which are transmitted between the machine 1 and the remote control means 5. These signals exist already in order to transfer control commands from the remote control means 5 to the machine 1 or information from the machine 1 to the remote control means 5. The distances 6,7 are determined based on a time of flight method. This method allows a determination of distances based on the time a signal takes to be transmitted from a transmitter to a receiver.

Based on the first and second distance 6,7 in combination with the distance L between the antennas, the distance determining unit is able to determine a position of the operator respectively the remote control means 5. The distances L,6,7 form a triangle which allows to determine a position of the operator in relation to the position of the first and second antenna 2,3.

In the symmetrical arrangement, as depicted in Figs. 1 and 2, the operator's position is determined based on triangulation. The asymmetrical arrangement, depicted in Fig. 2 determines the operator's position based on a triangulation approach.

The operator's position can be determined based on triangulation.

In cases where the antennas 2,3 cannot be arranged on the outmost positions, the distances 6,7 can be corrected in order to show actual distances between the outmost elements of the machine 1 and the remote control means 5.

The determined distances 6,7 from the first respective second antenna 2,3 to the remote control means 5 describe each a radius around each antenna 6,7. At two points the radiuses meet each other. Therefore, the operator's position can be determined down to two positions, left sided or right sided of the machine 1. An exception is that when the operator's position and the two antennas 2,3 form a line, which allows the determination of the operator's position to one position.

The operator's position is compared with the safety distance 4, whether the operator's position is inside or outside of the safety distance 4. Since the safety distance 4 is same on both sides of the machine 1, knowing that the operator is inside or outside the safety distance 4 is sufficient, regardless on which side of the machine the operator's position is.

Furthermore, it can be determined whether the operator's position is closer to the front end (the second antenna 3) or to the rear end (first antenna 2) of the machine 1.

Based on the information if the operator's position is inside or outside of the safety distance 4 in combination with the information whether the operator is closer to the front end or the rear end and machine movement information several different actions can be taken.

For example, the operator's position is in front of the machine 1 and the machine 1 is moving towards the operator, safety requirements will be violated since the 15 operator's position will be inside the safety distance 4. As soon as the operator's position violates the safety distance 4 the machine 1 is required to stop or to slow down. Since the distance determining unit determines that the operator's position is in front of the machine 1 it allows the machine 1 move in an opposite direction of the operator, in this case in a rear direction of the machine 1. Analog to these proceedings if the operator's position is closer to the rear end of the machine.

If the operator is inside of the safety distance 4 close to the rear end of the machine 1, the machine 1 is limited in its movements to move in the direction towards the front end.

The operator is protected while the machine 1 is still able to move limitedly or to be moved limitedly. Furthermore, this method can be adapted to fit to accessory equipment arranged on excavators or a like. According to the operator's position movements of the machine 1 can be limited in order to guarantee the safety of the operator. However, the machine 1 is still able to move away from the operator or move its accessory equipment away from the operator.

### Reference numbers:

- 1: machine
- 2: first antenna
- 3: second antenna
- 4: safety distance
- 5: remote control means
- 6: first distance
- 7: second distance

- L: distance first antenna to second antenna

### Reference numbers:

- 1: machine
- 2: first antenna
- 3: second antenna
- 4: safety distance
- 5: remote control means
- 6: first distance
- 7: second distance

- L: distance first antenna to second antenna

## Claims

1. Method to determine an operator held remote control means' (5) position in relation to a moveable machine (1) which is controlled by a control unit, wherein a distance determining unit determines the distance between the remote control means (5) and an antenna arrangement located on the machine (1), the antenna arrangement having a first antenna (2) and a second antenna (3) distanced to each other,
wherein the method comprises the following steps:
a) the distance determining unit determines a first distance (6) between the first antenna (2) and the remote control means (5) and a second distance (7) between the second antenna (3) and the remote control means (5),
wherein the distance determining unit determines the remote control means (5) position respectively operator's position based on the first and second distance (6,7),
b) wherein as soon as the remote control means (5) position violates a safety distance (4) and hence the operator's position violates the safety distance (4) the machine is required to stop, wherein the machine (1) is still able to move away from the operator,
c) **characterized in that** in step a), the distance determining unit determines the distances (6, 7) based on control signals which are transmitted between the machine (1) and the remote control means (5) for transferring control commands from the remote control means (5) to the machine (1).

2. Method according to claim 1 **characterized in that** the distance determining unit relies on a time of fly method.

3. Method according to claim 1 or 2 **characterized in that** the distance determining unit relies on data transferring signals.

4. Method according to claim 1 to 3 **characterized in that** first distance (6) and the second distance (7) are determined alternating.

5. Method according to claim 1 to 4 **characterized in that** movement possibilities of the machine (1) are limited according to the determined position of the remote control means (5).

6. A moveable machine (1) comprising an antenna arrangement, a control unit controlling the machine, a distance determining unit determining a distance between the antenna arrangement and an operator-holdable remote control means (5), wherein the distance determining unit is connected to the control unit,
wherein the antenna arrangement comprises a plurality of antennas, at least a first antenna (2) and a second antenna (3),
wherein the first antenna (2) and the second antenna (3) are arranged distanced to each other,
wherein the distance determining unit is configured to determine a first distance (6) between the first antenna (2) and the remote control means (5) and a second distance (7) between the second antenna (3) and the remote control means (5),
**characterized by** being configured to perform the method according to any one of the preceding claims.

7. The machine (1) according to claim 6 **characterized in that** the first and second antennas (2,3) are located on a longitudinal axis of the machine (1).

8. The machine (1) according to claim 6 **characterized in that** a third antenna is located offset to the longitudinal axis of the machine (1).

9. The machine (1) according to claim 6 or 8 **characterized in that** the first antenna (2) is located in the rear area and the second antenna (3) is located in the front area of the machine (1).

10. The machine (1) according to claim 6 to 9 **characterized in that** the first antenna (2) is arranged at the very rear end of the machine (1) and the second antenna (3) is arranged at the very front end of the machine (1).

11. The machine (1) according to claim 6 or 7 **characterized in that** the first antenna (2) is arranged in a middle position between the very front end and the very back rear of the machine (1).

12. The machine (1) according to claim 6 to 11 **characterized in that** the machine (1) is a self propelled machine.

13. The machine (1) according to claim 6 to 12 **characterized in that** the machine (1) comprises an articulated steering.

## Patentansprüche

1. Verfahren zur Bestimmung der Position einer durch einen Bediener gehaltenen Fernbedienungseinrichtung (5) in Bezug auf eine bewegliche Maschine (1), die durch eine Steuereinheit gesteuert wird, wobei eine Entfernungsbestimmungseinheit die Entfernung zwischen der Fernbedienungseinrichtung (5) und einer an der Maschine (1) befindlichen Antennenanordnung bestimmt, wobei die Antennenanordnung eine erste Antenne (2) und eine zweite Antenne (3) aufweist, die voneinander beabstandet sind,
wobei das Verfahren die folgenden Schritte umfasst:
a) die Entfernungsbestimmungseinheit bestimmt eine erste Entfernung (6) zwischen der ersten Antenne (2) und der Fernbedienungseinrichtung (5) und eine zweite Entfernung (7) zwischen der zweiten Antenne (3) und der Fernbedienungseinrichtung (5), wobei die Entfernungsbestimmungseinheit die Position der Fernbedienungseinrichtung (5) bzw. die Position des Bedieners basierend auf der ersten und der zweiten Entfernung (6, 7) bestimmt,
b) wobei, sobald die Position der Fernbedienungseinrichtung (5) einen Sicherheitsabstand (4) und damit die Position des Bedieners den Sicherheitsabstand (4) verletzt, die Maschine anhalten muss, wobei die Maschine (1) noch fähig ist, sich vom Bediener weg zu bewegen,
c) **dadurch gekennzeichnet, dass** in Schritt a) die Entfernungsbestimmungseinheit die Entfernungen (6, 7) auf der Grundlage von Steuersignalen bestimmt, die zwischen der Maschine (1) und der Fernbedienungseinrichtung (5) zur Übertragung von Steuerbefehlen aus der Fernbedienungseinrichtung (5) an die Maschine (1) übertragen werden.

2. Verfahren nach Anspruch 1, **dadurch gekennzeichnet, dass** die Entfernungsbestimmungseinheit auf einem Laufzeitverfahren beruht.

3. Verfahren nach Anspruch 1 oder 2, **dadurch gekennzeichnet, dass** die Entfernungsbestimmungseinheit auf Datenübertragungssignalen beruht.

4. Verfahren nach einem der Ansprüche 1 bis 3, **dadurch gekennzeichnet, dass** die erste Entfernung (6) und die zweite Entfernung (7) abwechselnd bestimmt werden.

5. Verfahren nach einem der Ansprüche 1 bis 4, **dadurch gekennzeichnet, dass** die Bewegungsmöglichkeiten der Maschine (1) gemäß der bestimmten Position der Fernbedienungseinrichtung (5) begrenzt werden.

6. Bewegliche Maschine (1), umfassend eine Antennenanordnung, eine Steuereinheit, die die Maschine steuert, eine Entfernungsbestimmungseinheit, die eine Entfernung zwischen der Antennenanordnung und einer durch den Bediener zu haltenden Fernbedienungseinrichtung (5) bestimmt, wobei die Entfernungsbestimmungseinheit mit der Steuereinheit verbunden ist,
wobei die Antennenanordnung eine Vielzahl von Antennen, zumindest eine erste Antenne (2) und eine zweite Antenne (3), umfasst,
wobei die erste Antenne (2) und die zweite Antenne (3) zueinander beabstandet angeordnet sind,
wobei die Entfernungsbestimmungseinheit dazu ausgelegt ist, eine erste Entfernung (6) zwischen der ersten Antenne (2) und der Fernbedienungseinrichtung (5) und eine zweite Entfernung (7) zwischen der zweiten Antenne (3) und der Fernbedienungseinrichtung (5) zu bestimmen,
**dadurch gekennzeichnet, dass** sie dazu ausgelegt ist, das Verfahren nach einem der vorhergehenden Ansprüche durchzuführen.

7. Maschine (1) nach Anspruch 6, **dadurch gekennzeichnet, dass** sich die erste und die zweite Antenne (2, 3) auf einer Längsachse der Maschine (1) befinden.

8. Maschine (1) nach Anspruch 6, **dadurch gekennzeichnet, dass** sich eine dritte Antenne versetzt zur Längsachse der Maschine (1) befindet.

9. Maschine (1) nach Anspruch 6 oder 8, **dadurch gekennzeichnet, dass** sich die erste Antenne (2) im hinteren Bereich und die zweite Antenne (3) im vorderen Bereich der Maschine (1) befindet.

10. Maschine (1) nach einem der Ansprüche 6 bis 9, **dadurch gekennzeichnet, dass** die erste Antenne (2) ganz am hinteren Ende der Maschine (1) und die zweite Antenne (3) ganz am vorderen Ende der Maschine (1) angeordnet ist.

11. Maschine (1) nach Anspruch 6 oder 7, **dadurch gekennzeichnet, dass** die erste Antenne (2) in einer mittleren Position zwischen dem ganz vorderen Ende und dem ganz hinteren Ende der Maschine (1) angeordnet ist.

12. Maschine (1) nach einem der Ansprüche 6 bis 11, **dadurch gekennzeichnet, dass** die Maschine (1) eine selbstangetriebene Maschine ist.

13. Maschine (1) nach einem der Ansprüche 6 bis 12, **dadurch gekennzeichnet, dass** die Maschine (1) eine Knicklenkung umfasst.

## Revendications

1. Procédé pour déterminer la position d'un moyen de commande à distance (5) porté par un opérateur par rapport à une machine mobile (1) qui est commandée par une unité de commande, dans lequel une unité de détermination de distance détermine la distance entre le moyen de commande à distance (5) et un agencement d'antenne situé sur la machine (1), l'agencement d'antenne ayant une première antenne (2) et une seconde antenne (3) éloignées l'une de l'autre,
dans lequel le procédé comprend les étapes suivantes :
a) l'unité de détermination de distance détermine une première distance (6) entre la première antenne (2) et le moyen de commande à distance (5) et une seconde distance (7) entre la seconde antenne (3) et le moyen de commande à distance (5),
dans lequel l'unité de détermination de distance détermine la position du moyen de commande à distance, respectivement la position de l'opérateur, sur la base de la première et de la seconde distance (6, 7),
b) dans lequel dès que la position du moyen de commande à distance (5) enfreint une distance de sécurité (4) et donc que la position de l'opérateur enfreint la distance de sécurité (4), la machine doit s'arrêter, dans lequel la machine (1) peut toujours s'éloigner de l'opérateur,
c) **caractérisé en ce qu'**à l'étape a), l'unité de détermination de distance détermine les distances (6, 7) sur la base de signaux de commande qui sont transmis entre la machine (1) et le moyen de commande à distance (5) pour transmettre des instructions de commande du moyen de commande à distance (5) à la machine (1).

2. Procédé selon la revendication 1, **caractérisé en ce que** l'unité de détermination de distance repose sur une méthode de temps de vol.

3. Procédé selon la revendication 1 ou 2, **caractérisé en ce que** l'unité de détermination de distance repose sur des signaux de transfert de données.

4. Procédé selon la revendication 1 à 3, **caractérisé en ce que** la première distance (6) et la seconde distance (7) sont déterminées en alternance.

5. Procédé selon la revendication 1 à 4, **caractérisé en ce que** des possibilités de mouvement de la machine (1) sont limitées en fonction de la position déterminée du moyen de commande à distance (5).

6. Machine mobile (1) comprenant un agencement d'antenne, une unité de commande commandant la machine, une unité de détermination de distance déterminant une distance entre l'agencement d'antenne et un moyen de commande à distance (5) portable par un opérateur, dans laquelle l'unité de détermination de distance est connectée à l'unité de commande,
dans laquelle l'agencement d'antenne comprend une pluralité d'antennes, au moins une première antenne (2) et une seconde antenne (3),
dans laquelle la première antenne (2) et la seconde antenne (3) sont agencées éloignées l'une de l'autre,
dans laquelle l'unité de détermination de distance est configurée pour déterminer une première distance (6) entre la première antenne (2) et le moyen de commande à distance (5) et une seconde distance (7) entre la seconde antenne (3) et le moyen de commande à distance (5),
**caractérisée en ce qu'**elle est configurée pour mettre en œuvre le procédé selon l'une quelconque des revendications précédentes.

7. Machine (1) selon la revendication 6, **caractérisée en ce que** les première et seconde antennes (2, 3) sont situées sur un axe longitudinal de la machine (1).

8. Machine (1) selon la revendication 6, **caractérisée en ce qu'**une troisième antenne est située en décalage par rapport à l'axe longitudinal de la machine (1).

9. Machine (1) selon la revendication 6 ou 8, **caractérisée en ce que** la première antenne (2) est située dans la zone arrière et la seconde antenne (3) est située dans la zone avant de la machine (1).

10. Machine (1) selon la revendication 6 à 9, **caractérisée en ce que** la première antenne (2) est agencée au niveau de l'extrémité arrière de la machine (1) et la seconde antenne (3) est agencée au niveau de l'extrémité avant de la machine (1).

11. Machine (1) selon la revendication 6 ou 7, **caractérisée en ce que** la première antenne (2) est agencée dans une position intermédiaire entre l'extrémité avant et l'extrémité arrière de la machine (1).

12. Machine (1) selon la revendication 6 à 11, **caractérisée en ce que** la machine (1) est une machine à autopropulsion.

13. Machine (1) selon la revendication 6 à 12, **caractérisée en ce que** la machine (1) comprend une direction articulée.
